# EUROPÄISCHE PATENTSCHRIFT

(11) **EP 0 802 721 B1**
(45) Veröffentlichungstag und Bekanntmachung des Hinweises auf die Patenterteilung: **26.08.1998**
(21) Anmeldenummer: 95935943.1
(22) Anmeldetag: 17.10.1995
(51) Int. Cl.: A01J 7/00, A01J 5/04

(54) **VORRICHTUNG ZUR SEPARIERUNG VON GEMELKEN**
DEVICE FOR SEPARATING MILK YIELDS OF PARTICULAR COWS
PROCEDE PERMETTANT DE SEPARER DES PRODUITS INDIVIDUELS DE LA TRAITE

(30) Priorität: 28.01.1995 DE 19502688
(43) Veröffentlichungstag der Anmeldung: 29.10.1997
(73) Patentinhaber: WESTFALIA SEPARATOR AG, 59302 Oelde (DE)
(72) Erfinder: WOHLBRÜCK, Ralf, D-59302 Oelde (DE); BÜCKER, Heinrich, D-33449 Langenberg (DE)
(86) Internationale Anmeldenummer: EP9504078
(87) Internationale Veröffentlichungsnummer: WO9622679

(56) Entgegenhaltungen:
- DE-C- 4 007 327

## Beschreibung

Die Erfindung bezieht sich auf eine Vorrichtung zur Separierung von Gemelken aus Melkzeugen in Melkanlagen, mit einer Steuereinheit, einem Abscheidebehälter und einer Umschalteinrichtung zur wahlweisen Verbindung einer Melkleitung mit einer Milchleitung oder einer zum Abscheidebehälter führenden Zulaufleitung.

Eine derartige Vorrichtung ist beispielsweise bekannt aus der DE 40 07 327 C1. Dabei werden Gemelke mit hohem Gehalt an schädlichen Keimen von der Sammelmilch getrennt und in einen speziellen Abscheidebehälter geleitet. Eine automatische Entleerung des Abscheidebehälters ist bei der bekannten Vorrichtung nicht vorgesehen.

Mit fortschreitender Automatisierung des Melkprozeßes führen unterschiedliche Gründe zu der Notwendigkeit nicht nur Gemelke mit besonders hohem Keimgehalt von der Sammelmilch abzutrennen, sondern es kann auch aufgrund der Veränderung der Milchqualität eine getrennte Ableitung dieser Milch erforderlich sein. Weiterhin wäre ein Gesamtgemelk von der Sammelmilch zu trennen, wenn in einem führenden, mit dem Melksystem datentechnisch verbundenen Herdenmanagementsystem die Anweisung hinterlegt ist, das Gemelk eines bestimmten am Melkplatz automatisch identifizierten Tieres abzutrennen.

Der Erfindung liegt die Aufgabe zugrunde, eine Vorrichtung zu schaffen, die es ermöglicht eine Teilmenge oder das gesamte Gemelk automatisch aus dem Melksystem auszuschleusen.

Diese Aufgabe wird dadurch gelöst, daß der Abscheidebehälter über eine Verbindungsleitung mit der Milchleitung verbunden und eine erste Ablaufleitung des Abscheidebehälters mit einer Förderpumpe und einem ersten Rückschlagventil versehen ist.

Über die Verbindungsleitung wird der Unterdruck der Milchleitung auf den Abscheidebehälter übertragen, so daß das zu separierende Gemelk in den Abscheidebehälter gesaugt wird, wenn die Melkleitung über die Umschalteinrichtung mit der Zulaufleitung verbunden ist. Die Betätigung der Umschalteinrichtung erfolgt durch die Steuereinheit in Abhängigkeit von vorgegebenen Kriterien. Das erste Rückschlagventil in der Ablaufleitung des Abscheidebehälters schließt bei Unterdruck und verhindert damit den Eintritt von Atmosphäre über die erste Ablaufleitung in den Abscheidebehälter. Durch Einschalten der Förderpumpe kann das Gemelk gegen den im Abscheidebehälter herrschenden Unterdruck abgezogen werden, wobei erste das Rückschlagventil durch den Milchstrom automatisch geöffnet wird. Somit können beliebig große Mengen Gemelk kontinuierlich oder diskontinuierlich aus dem Melkprozeß automatisch separiert werden.

Die Aufgabe kann auch dadurch gelöst werden, daß der Abscheidebehälter mit der Milchleitung über eine Verbindungsleitung verbunden ist, in der eine Ventileinrichtung angeordnet ist, die mit der Atmosphäre in Verbindung steht, wobei eine erste Ablaufleitung des Abscheidebehälters mit einem ersten Rückschlagventil versehen ist.

Bei dieser Lösung wird der Abscheidebehälter durch die Ventileinrichtung mit der Milchleitung verbunden, wenn über die Zulaufleitung das Gemelk abgezogen werden soll. Zum Ausschleusen des Gemelks wird die Melkleitung über die Umschalteinrichtung mit der Milchleitung und der Abscheidebehälter über die Ventileinrichtung mit der Atmosphäre verbunden, wodurch sich im Abscheidebehälter Atmosphärendruck aufbaut und das dabei öffnende erste Rückschlagventil den Ablauf des Gemelks ermöglicht.

Bei einer vorteilhaften Ausgestaltung wird die Umschalteinrichtung gebildet durch ein Absperrventil in der Melkleitung und ein zweites Rückschlagventil in der Zulaufleitung. Das zweite Rückschlagventil öffnet selbsttätig, wenn der Abscheidebehälter über die Ventileinrichtung mit dem Unterdruck in der Milchleitung verbunden wird.

Bei einer weiteren vorteilhaften Ausgestaltung wird die Umschalteinrichtung gebildet durch eine erste Umschalteinheit zur wahlweisen Verbindung der Melkleitung mit der Zulaufleitung oder einer mit einem ersten Absperrorgan versehenen zweiten Ablaufleitung und eine zweite Umschalteinheit zur wahlweisen Verbindung der Melkleitung mit der Milchleitung oder einer mit einem zweiten Absperrorgan versehenen Spülleitung. Diese Umschalteinrichtung ermöglicht gleichzeitig das Spülen der Vorrichtung, wenn die Melkleitung gleichzeitig mit der zweiten Ablaufleitung und mit der Spülleitung verbunden ist.

Ausführungsbeispiele der Erfindung sind in der Zeichnung dargestellt und werden nachstehend näher erläutert. Es zeigt
- Fig. 1: eine Vorrichtung mit einer Förderpumpe,
- Fig. 2: eine Vorrichtung mit einer Ventileinrichtung,
- Fig. 3: eine Vorrichtung mit einem Absperrventil und einem zweiten Rückschlagventil,
- Fig. 4: eine Vorrichtung mit einer Spülleitung.

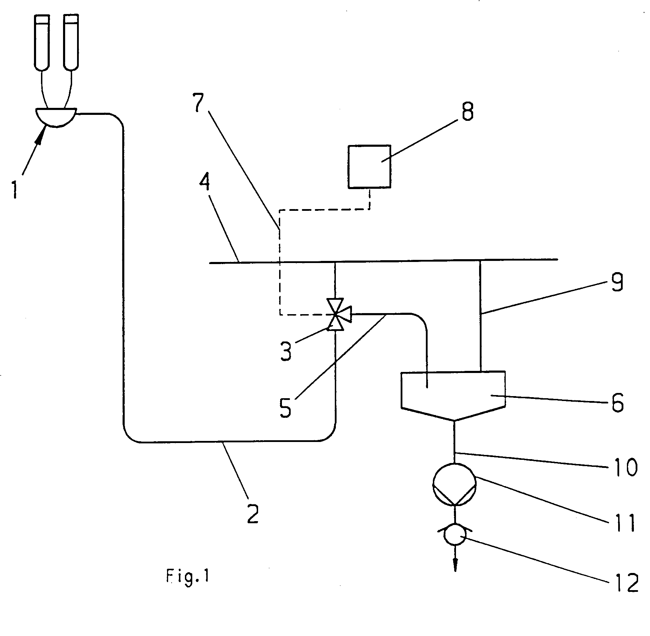

Mit 1 ist in der Fig. 1 ein Melkzeug bezeichnet, von dem eine Melkleitung 2 mit einer Umschalteinrichtung 3 zu einer Milchleitung 4 führt. Die Umschalteinrichtung 3 ist über eine Zulaufleitung 5 mit einem Abscheidebehälter 6 und über eine Leitung 7 mit einer Steuereinheit 8 verbunden. Der Abscheidebehälter 6 steht über eine Verbindungsleitung 9 mit der Milchleitung 4 in Verbindung. In einer ersten Ablaufleitung 10 des Abscheidebehälters 6 sind eine Förderpumpe 11 und ein erstes Rückschlagventil 12 angeordnet.

Beim üblichen Milchentzug ist die Melkleitung 2 über die Umschalteinrichtung 3 mit der Milchleitung 4 verbunden, wobei die Zulaufleitung 5 zum Abscheidebehälter 6 abgesperrt ist. Das Gemelk fließt dann über die Milchleitung 4 in einen nicht dargestellten Milchsammelbehälter. Sobald der Steuereinheit 8 Kriterien gemeldet werden, die eine Absonderung des Gemelks verlangen, wird die Melkleitung 2 über die Umschalteinrichtung 3 mit der Zulaufleitung 5 verbunden und das Gemelk fließt jetzt in den Abscheidebehälter 6, der über die Verbindungsleitung 9 mit dem Unterdruck der Milchleitung 4 beaufschlagt ist. Zum Ausschleusen des Gemelks wird die Förderpumpe 11 eingeschaltet, die den Unterdruck im Abscheidebehälter 6 überwindet und deren Förderstrom das erste Rückschlagventil 12 selbsttätig öffnet.

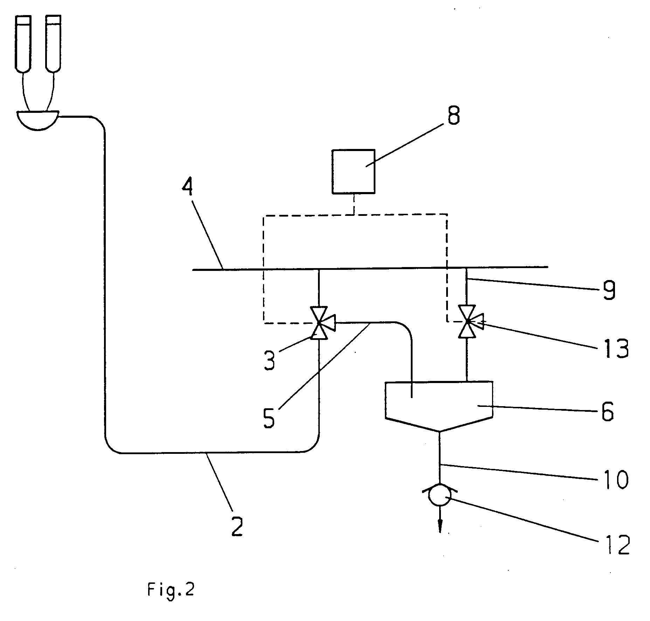

Bei der Ausführung gemäß Fig. 2 ist in der Verbindungsleitung 9 eine Ventileinrichtung 13 vorgesehen, die den Abscheidebehälter 6 wahlweise mit dem Unterdruck der Milchleitung 4 oder mit Atmosphärendruck beaufschlagen kann. Zur Separierung eines Gemelks werden über die Steuereinheit 8 die Melkleitung 2 mit der Zulaufleitung 5 und der Abscheidebehälter 6 über die Ventileinrichtung 13 mit der Milchleitung 4 verbunden.
Zum Ausschleusen des Gemelks aus dem Abscheidebehälter 6 werden die Melkleitung 2 über die Umschalteinrichtung 3 wieder mit der Milchleitung 4 und der Abscheidebehälter 6 über die Ventileinrichtung 13 mit der Atmosphäre verbunden. Das erste Rückschlagventil 12 öffnet bei Atmosphärendruck und ermöglicht damit die Entleerung des Abscheidebehälters 6. Auf eine Förderpumpe zur Entleerung des Abscheidebehälters 6 kann bei dieser Lösung verzichtet werden.

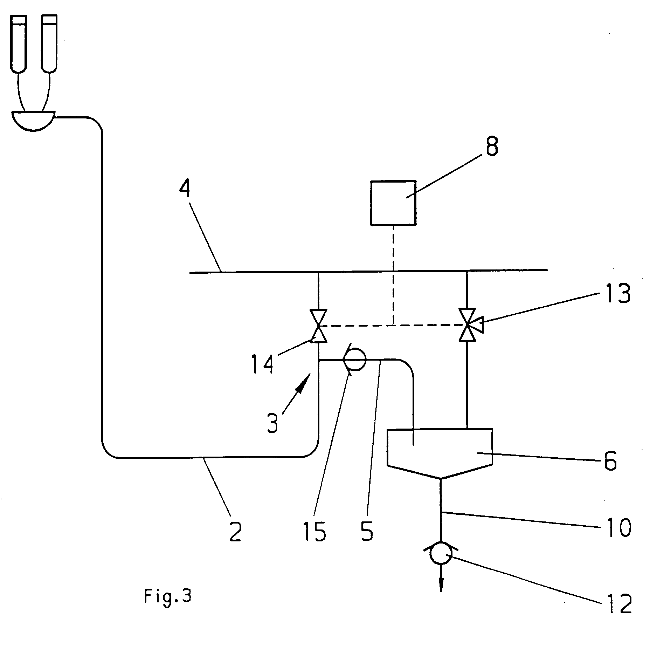

Die Vorrichtung gemäß Fig. 3 beinhaltet eine Umschalteinrichtung 3, die durch ein Absperrventil 14 in der Melkleitung 2 und ein zweites Rückschlagventil 15 in der Zulaufleitung 5 gebildet wird.
Beim üblichen Milchentzug ist das Absperrventil 14 geöffnet und der Abscheidebehälter 6 wird über die Ventileinrichtung 13 mit Atmosphäre beaufschlagt. Dabei schließt das zweite Rückschlagventil 15 in der Zulaufleitung 5 selbsttätig. Das erste Rückschlagventil 12 in der ersten Ablaufleitung 10 ist jetzt geöffnet und ermöglicht die Entleerung des Abscheidebehälters 6.
Soll ein Gemelk separiert werden, so wird über die Steuereinheit 8 das Absperrventil 14 geschlossen und der Abscheidebehälter 6 über die Ventileinrichtung 13 mit dem Unterdruck der Milchleitung 4 verbunden. Dadurch öffnet das zweite Rückschlagventil 15 selbttätig und das erste Rückschlagventil 12 schließt. Das Gemelk wird jetzt über die Zulaufleitung 5 in den Abscheidebehälter 6 geleitet. Sobald die Vorrichtung wieder auf den üblichen Milchentzug umgeschaltet wird, entleert sich der Abscheidebehälter 6 automatisch durch das sich öffnende erste Rückschlagventil 12.

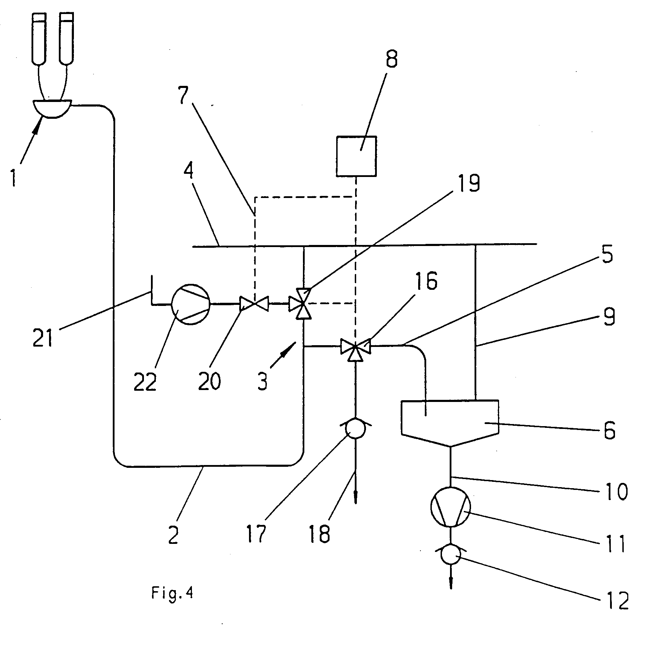

Bei der Vorrichtung gemäß Fig. 4 kann die Melkleitung 2 durch eine erste Umschalteinheit 16 wahlweise mit der Zulaufleitung 5 oder einer mit einem ersten Absperrorgan 17 versehenen zweite Ablaufleitung 18 und durch eine zweite Umschalteinheit 19 wahlweise mit der Milchleitung 4 oder einer mit einem zweiten Absperrorgan 20 versehenen Spülleitung 21 in Verbindung gebracht werden.
Beim üblichen Milchentzug ist die Melkleitung 2 über die erste Umschalteinheit 16 mit der zweiten Ablaufleitung 18 und über die zweite Umschalteinheit 19 mit der Milchleitung 4 verbunden. Das erste Absperrorgan 17 schließt selbsttätig. Das Gemelk fließt somit in die Milchleitung 4.
Zur Absonderung eines Gemelkes wird die Melkleitung 2 über die erste Umschalteinheit 16 mit der Zulaufleitung 5 und über die zweite Umschalteinheit 19 mit der Spülleitung 21 verbunden. Das Absperrorgan 20 in der Spülleitung 21 ist dabei geschlossen. Daher kann das Gemelk nur in den Abscheidebehälter 6 gelangen, aus dem es durch Einschalten der Förderpumpe 11 ausgeschleust wird.
Zwecks Spülung der Vorrichtung wird die Melkleitung 2 über die erste Umschalteinheit 16 mit der zweiten Ablaufleitung 18 und über die zweite Umschalteinheit 19 mit der Spülleitung 21 verbunden. Durch Öffnen des zweiten Absperrorganes 20 und Einschalten einer Spülmittelpumpe 22 wird das Spülmittel über die Spülleitung 21 und die Melkleitung 2 bis zum Melkzeug 1 gefördert. Ein Teil der Spüllösung fließt über die erste Umschalteinheit 16 in die zweite Ablaufleitung 18, deren zweites Absperrorgan 17 durch den Spülmitteldruck selbsttätig öffnet.
Die beschriebenen Schaltzustände können durch die Steuereinheit 8 ausgelöst werden.

## Patentansprüche

1. Vorrichtung zur Separierung von Gemelken aus Melkzeugen (1) in Melkanlagen, mit einer Steuereinheit (8), einem Abscheidebehälter (6) und einer Umschalteinrichtung (3) zur wahlweisen Verbindung einer Melkleitung (2) mit einer Milchleitung (4) oder einer zum Abscheidebehälter (6) führenden Zulaufleitung (5), **dadurch gekennzeichnet**, daß der Abscheidebehälter (6) über eine Verbindungsleitung (9) mit der Milchleitung (4) verbunden und eine erste Ablaufleitung (10) des Abscheidebehälters (6) mit einer Förderpumpe (11) und einem ersten Rückschlagventil (12) versehen ist.

2. Vorrichtung zur Separierung von Gemelken aus Melkzeugen (1) in Melkanlagen, mit einer Steuereinheit (8), einem Abscheidebehälter (6) und einer Umschalteinrichtung (3) zur wahlweisen Verbindung einer Melkleitung (2) mit einer Milchleitung (4) oder einer zum Abscheidebehälter (6) führenden Zulaufleitung (5), **dadurch gekennzeichnet**, daß der Abscheidebehälter (6) mit der Milchleitung (4) über eine Verbindungsleitung (9) verbunden ist, in der eine Ventileinrichtung (13) angeordnet ist, die mit der Atmosphäre in Verbindung steht, wobei eine erste Ablaufleitung (10) des Abscheidebehälters (6) mit einem ersten Rückschlagventil (12) versehen ist.

3. Vorrichtung nach Anspruch 2, dadurch gekennzeichnet, daß die Umschalteinrichtung (3) gebildet wird durch ein Absperrventil (14) in der Melkleitung (2) und ein erstes Rückschlagventil (15) in der Zulaufleitung (5).

4. Vorrichtung nach Anspruch 1, dadurch gekennzeichnet, daß die Umschalteinrichtung (3) gebildet wird durch eine erste Umschalteinheit (16) zur wahlweisen Verbindung der Melkleitung (2) mit der Zulaufleitung (5) oder einer mit einem ersten Absperrorgan (17) versehenen zweiten Ablaufleitung (18) und eine zweite Umschalteinheit (19) zur wahlweisen Verbindung der Melkleitung (2) mit der Milchleitung (4) oder einer mit einem zweiten Absperrorgan (20) versehenen Spülleitung (21).

## Claims

1. Device for separating milk yields of particular cows from milking clusters (1) in milking plants, with a control unit (8), a separating vessel (6) and a switch-over device (3) for optional connection of a milking line (2) to a milk line (4) or to a feed line (5) leading to a separating vessel (6), **characterised in that** the separating vessel (6) is connected to the milk line (4) via a connection line (9) and a first discharge line (10) from the separating vessel (6) is provided with a pump (11) and a first non-return valve (12).

2. Device for separating milk yields of particular cows from milking clusters (1) in milking plants, with a control unit (8), a separating vessel (6) and a switch-over device (3) for optional connection of a milking line (2) to a milk line (4) or to a feed line (5) leading to a separating vessel (6), **characterised in that**, the separating vessel (6) is connected to the milk line (4) via a connection line (9) in which a valve unit (13) is situated which is connected to the atmosphere, whereby a first discharge line (10) from the separating vessel (6) is provided with a first non-return valve (12).

3. Device according to claim 2, characterised in that the switch-over device (3) is formed by a shut-off valve (14) in the milking line (2) and a first non-return valve (15) in the feed line (5).

4. Device according to claim 1, characterised in that the switch-over device (3) is formed by a first switch-over unit (16) for optional connection of the milking line (2) to the feed line (5) or a second discharge line (18) provided with a first shut-off device (17) and a second switch-over unit (19) for optional connection of the milking line (2) with the milk line (4) or a rinse line (21) provided with a second shut-off device (20).

## Revendications

1. Dispositif de séparation des traites provenant de faisceaux trayeurs (1) dans des installations de traite, muni d'une unité de commande (8), d'une cuve de séparation (6) et d'un dispositif de commutation (3) pouvant relier une conduite de traite (2) soit à une tuyauterie à lait (4) soit à une conduite d'alimentation (5) menant vers la cuve de séparation (6) **caractérisé en ce que** la cuve de séparation (6) est reliée la tuyauterie à lait (4) par une ligne de raccordement (9), et qu'une première conduite d'écoulement (10) de la cuve de séparation (6) est munie d'une pompe (11) et d'un premier clapet anti-retour (12).

2. Dispositif de séparation des traites provenant de faisceaux trayeurs (1) dans des installations de traite, muni d'une unité de commande (8), d'une cuve de séparation (6) et d'un dispositif de commutation (3) pouvant relier une conduite de traite (2) soit à une tuyauterie à lait (4) soit à une conduite d'alimentation (5) menant vers la cuve de séparation (6), **caractérisé en ce que** la cuve de séparation (6) est reliée à la tuyauterie de lait (4) par une ligne de raccordement (9) comportant une vanne (13) communiquant avec l'atmosphère, une première conduite d'écoulement (10) de la cuve de séparation (6) étant munie d'un premier clapet anti-retour (12).

3. Dispositif selon revendication 2, caractérisé en ce que le dispositif de commutation (3) est constitué par une vanne d'arrêt (14) incorporée dans la conduite de traite (2) et par un premier clapet anti-retour (15) incorporé dans la conduite d'alimentation (5).

4. Dispositif selon revendication 1, caractérisé en ce que le dispositif de commutation (3) est constitué par une première unité de commutation (16) assurant la liaison de la conduite de traite (2) soit à la conduite d'alimentation (5) soit à une seconde conduite d'écoulement (19) comportant un premier organe d'arrêt (17) et par une seconde unité de commutation (19) pouvant relier la conduite de traite (2) soit à la tuyauterie à lait (4) soit à une conduite de rinçage (21) munie d'un second organe d'arrêt (20).
